# EUROPEAN PATENT SPECIFICATION

(11) **EP 3 768 065 B1**
(45) Date of publication and mention of the grant of the patent: **09.08.2023**
(21) Application number: 19711357.4
(22) Date of filing: 18.03.2019
(51) Int. Cl.: A01F 15/08

(54) **AN AGRICULTURAL BALER**
LANDWIRTSCHAFTLICHE BALLENPRESSE
PRESSE À BALLES AGRICOLE

(30) Priority: 20.03.2018 BE 201805184
(43) Date of publication of application: 27.01.2021
(73) Proprietor: CNH Industrial Belgium NV, 8210 Zedelgem (BE)
(72) Inventor: MONBALIU, Sven, 8377 Zuienkerke (BE)
(74) Representative: CNH Industrial IP Department
(86) International application number: PCT/EP2019/056667
(87) International publication number: WO 2019/179919

(56) References cited:
- EP-A1- 2 919 576
- EP-A2- 2 614 703
- WO-A1-2014/184185
- WO-A1-2017/005635

## Description

### Background of the Invention

The present invention relates to agricultural balers, and, more particularly, to an agricultural baler that can provide a consistent force to a bale in a bale chamber in an efficient way.

Agricultural balers are used to consolidate and package crop material so as to facilitate the storage and handling of the crop material for later use. In the case of hay, a mower-conditioner is typically used to cut and condition the crop material for windrow drying in the sun. In the case of straw, an agricultural combine discharges non-grain crop material from the rear of the combine defining the straw (such as wheat or oat straw) which is to be picked up by the baler. The cut crop material is typically raked and dried, and a baler, such as a large square baler or round baler, straddles the windrows and travels along the windrows to pick up the crop material and form it into bales.

On a large square baler, a pickup unit at the front of the baler gathers the cut and windrowed crop material from the ground. The pickup unit includes a pickup roll, and optionally may include other components such as side shields, stub augers, wind guard, etc. A packer unit is used to move the crop material from the pickup unit to a duct or pre-compression chamber. The packer unit forms a wad of crop within the pre-compression chamber which is then transferred to a main bale chamber. For purposes of discussion, the charge of crop material within the pre-compression chamber will be termed a "wad", and the charge of crop material after being compressed within the main bale chamber will be termed a "flake". Typically such a packer unit includes packer tines or forks to move the crop material from the pickup unit into the pre-compression chamber. Instead of a packer unit it is also known to use a rotor cutter unit which may chop the crop material into smaller pieces.

A stuffer unit transfers the wad of crop material in charges from the pre-compression chamber to the main bale chamber. Typically such a stuffer unit includes stuffer forks which are used to move the wad of crop material from the pre-compression chamber to the main bale chamber, in sequence with the reciprocating action of a plunger within the main bale chamber. In the main bale chamber, after the wad is injected into the bale chamber, the plunger compresses the wad of crop material into a flake against previously formed flakes to form a bale and, at the same time, gradually advances the bale toward the outlet end of the bale chamber.

The bale chamber typically has three moving walls, being the top and two sides, which may be positioned by two hydraulically controlled actuators connected to a positioning mechanism. Pressure exerted by the walls of the bale chamber dictates the factional force required to overcome static friction and shift the flakes in the bale chamber. An increased force to shift the flakes causes the plunger to compact the flakes tighter, to thereby produce a higher density bale.

When enough flakes have been added and the bale reaches a full or other predetermined size, a number of knotters are actuated which wrap and tie twine, cord or the like around the bale while it is still in the main bale chamber. The twine is cut and the formed baled is ejected out the back of the baler as a new bale is formed. If the bale has not been formed with application of a consistent pressure by the three moving walls, then this can result in a poor bale shape. Also, poor feeding of crop material in the bale chamber can result in a poor bale shape. For a poorly shaped bale, the twine can be prone to snapping due to re-expansion of the crop material after the bale leaves a large square baler.

EP 2614703 A1 discloses a baler having a bale chamber comprising chamber doors pivotably connected to a fixed frame part. Upon obtaining at least one crop parameter, a door angle value between two side sections of a door is selected; and the position of one of the side sections with respect to the other one is adapted in accordance with the selected door angle value.

EP 2919576 A1 discloses a density control system for an agricultural baler, which comprises a baling chamber comprising a plurality of walls including at least one movable wall section, an intake duct leading into the baling chamber, and a plunger for compressing charges of crop material to a package in the chamber, actuator means for adjusting the position of the at least one movable wall section in response to an output of the density control system in order to vary the density of said package, characterized in that the density control system comprises a sensor for measuring the position of the at least one movable wall section, a comparator for comparing said position with a threshold position and a decision module configured to stop the movement of the actuator means when the position exceeds the threshold position.

EP 2996458 A1 discloses an agricultural baler comprising a baling chamber with a plunger that is provided to reciprocally move in the baling chamber, the baler comprising baling chamber walls separating the baling chamber from the environment, wherein the baling chamber walls comprises fluid channels formed at the environment side of the wall and directly adjacent to the baling chamber in such a manner that, during operation of the agricultural baler, heat is transferred from the baling chamber wall to fluid in the fluid channels.

WO 2017/005635 A1 discloses a bale chamber for the compression of crop into bales with a floor, ceiling, and two walls. At least one retractable friction block in the ceiling or walls is used to increase the compression and density of the crop. The friction blocks extend inwards as an increasing function of either decreased pressure being exerted against the ceiling or walls by the crop being baled, or inward displacement of the ceiling or walls by the actuator system.

### Summary of the Invention

According to the invention in a first aspect there is provided an agricultural baler, comprising:
a bale chamber for the compression of crop material into bales, the bale chamber having a floor, a ceiling, a first wall and a second wall, and wherein a bale forming direction of the bale-chamber extends from an inlet end to an outlet end of the bale chamber;
a plunger for forcing the crop material from the inlet end of the bale chamber towards the outlet end of the bale chamber;
wherein one or more of the ceiling, the first wall and the second wall comprises:
   an inner surface that defines the bale-chamber; and
   an outer surface on the opposing side to the inner surface;
wherein, in the bale forming direction:
   the inner surface has a convex profile that defines an inner apex;
   the outer surface has a convex profile that defines an outer apex; and
   the outer apex is aligned with the inner.

Advantageously, such a baler can result in higher, more consistent, compression of the agricultural crop material in the bale, thereby resulting in greater bale density. In this way, binder twine failure can be reduced after the bale leaves the baler.

The inner apex and the outer apex may be aligned, in the bale forming direction, with a maximum-stress-point of the wall or ceiling with the convex profile. The maximum-stress-may correspond to a region that experiences maximum stress when a bale is in the bale chamber.

The thickness of the wall or ceiling with the convex profile may:
increase as a function of distance from a proximal end of the wall to the outer apex, for at least a portion of the wall or ceiling with the convex profile that is up to the outer apex; and / or
decrease as a function of distance from a proximal end of the wall, for at least a portion of the wall or ceiling with the convex profile that is beyond the outer apex.

The agricultural baler may further comprise:
an actuator system operable to press the ceiling and the two walls inward against the crop material being baled; and
wherein the inner apex and the outer apex are located in the bale forming direction between: (i) the entry-end of the bale chamber, and (ii) the actuator system.

The wall or ceiling with the convex profile may comprise an inner plate and an outer plate, with a cavity between the inner plate and the outer plate. An inner surface of the inner plate may provide the inner surface of the wall. An outer surface of the outer plate may provide the outer surface of the wall. The thickness of one or both of the inner plate and outer plate may vary along the bale forming direction of the bale chamber.

The thickness of the inner and / or outer plate may increase as a function of distance from the proximal end of the wall or ceiling with the convex profile to the outer / inner apex, for at least a portion of the inner and / or outer plate that is up to the outer / inner apex. The thickness of the inner and / or outer plate may decrease as a function of distance from the proximal end of the wall or ceiling with the convex profile, for at least a portion of the inner and / or outer plate that is beyond the outer / inner apex.

The outer apex may extend laterally across substantially the entire width of the outer surface. The inner apex may extend laterally across substantially the entire width of the inner surface.

The thickness of the wall or ceiling with the convex profile may vary in a lateral dimension, at least at a region that corresponds to the outer apex.

The wall or ceiling with the convex profile may comprise an inner plate and an outer plate, with a cavity between the inner plate and the outer plate. An inner surface of the inner plate may provide the inner surface of the wall. An outer surface of the outer plate may provide the outer surface of the wall. The thickness of one or both of the inner plate and outer plate may vary in a lateral dimension, at least at a region that corresponds to the outer apex.

Two or more of the ceiling, the first wall and the second wall may comprise:
an inner surface that defines the bale-chamber; and
an outer surface on the opposing side to the inner surface;
wherein, in the bale forming direction:
the inner surface may have a convex profile that defines an inner apex;
the outer surface may have a convex profile that defines an outer apex; and
the outer apex may be substantially aligned with the inner apex.

In the bale forming direction:
the inner apex on one of the inner surfaces may be aligned with the inner apex on the other inner surface; and / or
the outer apex on one of the outer surfaces may be aligned with the outer apex on the other outer surface.

Each of the ceiling, the first wall and the second wall comprise:
an inner surface that defines the bale-chamber; and
an outer surface on the opposing side to the inner surface;
wherein, in the bale forming direction:
the inner surface may have a convex profile that defines an inner apex;
the outer surface may have a convex profile that defines an outer apex; and
the outer apex may be substantially aligned with the inner apex.

In the bale forming direction:
the inner apex on one of the inner surfaces may be aligned with the inner apex on the other two inner surfaces; and
the outer apex on one of the outer surfaces may be aligned with the outer apex on the other two outer surfaces.

### Brief Description of the Drawings

There now follows a description of preferred embodiments of the invention, by way of non-limiting example, with reference being made to the accompanying drawings in which:
Fig. 1 is a perspective cutaway view showing the internal workings of a large square baler having a bale chamber;
Fig. 2 is a partially exploded view illustrating the bale chamber of Fig. 1;
Fig. 3 shows a top view of a bale chamber; and
Fig. 4a and 4b show perspective views of a wall that defines the bale chamber of Fig. 3.

### Detailed Description of the Drawings

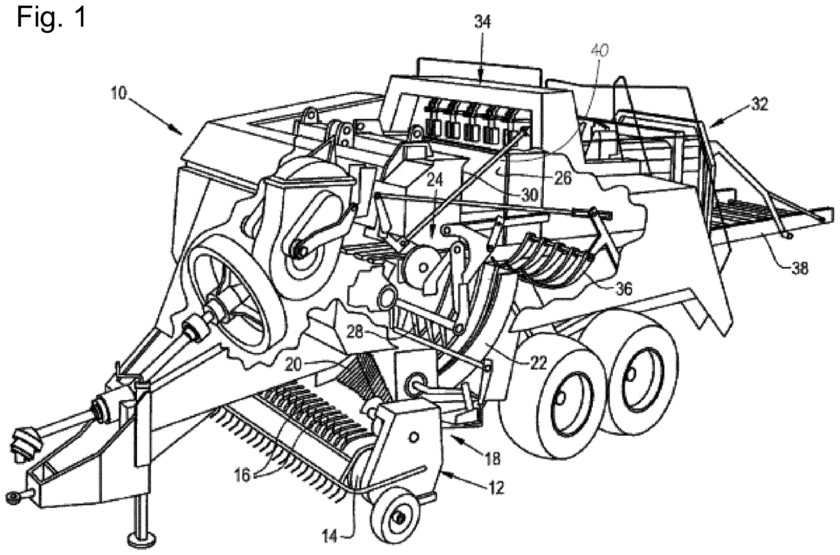

Referring now to the drawings, and more particularly to Fig. 1, there is shown an agricultural harvester in the form of a large square baler 10. Fig. 1 is a perspective cutaway view showing the internal workings of the large square baler 10. The large square baler 10 operates on a two stage feeding system. Crop material is lifted from windrows into the large square baler 10 using a pickup unit 12. The pickup unit 12 includes a rotating pickup roll 14 with tines 16 which move the crop rearward toward a packer unit 18. An optional pair of stub augers (one of which is shown, but not numbered) are positioned above the rotating pickup roll 14 to move the crop material laterally inward. The packer unit 18 includes packer tines 20 which push the crop into a pre-compression chamber 22 to form a wad of crop material. The packer tines 20 intertwine the crop together and pack the crop within pre-compression chamber 22. The pre-compression chamber 22 and the packer tines 20 function as the first stage for crop compression.

Once the pressure in the pre-compression chamber 22 reaches a predetermined sensed value, a stuffer unit 24 moves the wad of crop from the pre-compression chamber 22 into an inlet end 40 of the bale chamber 26. The stuffer unit 24 includes stuffer forks 28 which thrust the wad of crop directly in front of a plunger 30, which reciprocates within the bale chamber 26 and compresses the wad of crop into a flake. The stuffer forks 28 return to their original stationary state after the wad of material has been moved into the bale chamber 26. The plunger 30 compresses the wads of crop into flakes to form a bale and, at the same time, gradually advances the bale toward an outlet end 32 of the bale chamber 26. The bale chamber 26 and plunger 30 function as the second stage for crop compression. When enough flakes have been added and the bale reaches a full (or other predetermined) size, the knotters 34 are actuated which wrap and tie twine around the bale while it is still in the bale chamber 26. Needles 36 bring the lower twine up to the knotters 34 and the tying process then takes place. The twine is cut and the formed bale is ejected from a discharge chute 38 as a new bale is formed.

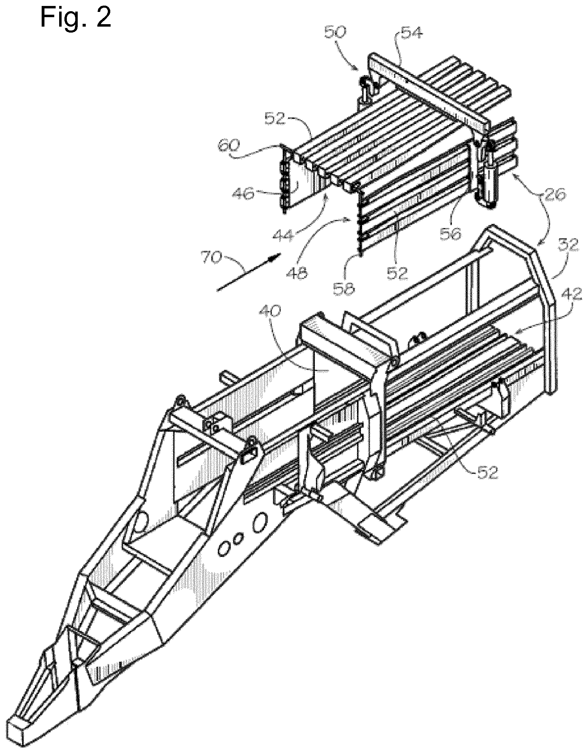

Referring now to Fig. 2, a certain framework of the large square baler 10 is revealed with the bale chamber 26 illustrated in an exploded view. Bale chamber 26 is defined by a floor 42, a ceiling 44, a first wall 46, and a second wall 48. Ceiling 44 of bale chamber 26 is sometimes referred to in the art as the "top door," and walls 46, 48 are sometimes referred to in the art as "side doors." However, for the purposes of clarity in the present application, the terms "ceiling" and "walls" will be used, though it be understood that the respective terms are interchangeable. For purposes of discussion floor 42 will be considered fixed relative to the framework, and the ceiling 44 and walls 46, 48 are movable by the action of a density ring actuator system 50. The bale chamber 26 has a cross-section that is variable as determined by the density ring actuator system 50. The ceiling 44 and the walls 46, 48 are shown in Fig. 2 as being expanded out creating an outward taper allowing a bale to easily pass through the bale chamber 26. Under normal use the bale chamber 26 is positioned by the density ring actuator system 50 to be tapered inwardly leading to a reduced cross section as the bale moves through the bale chamber 26. Controlling the cross section of the bale chamber 26 results in control of the density of the bale that is formed in the bale chamber 26, since a more inwardly tapered configuration increases the restriction of travel of the bale.

The floor 42, ceiling 44 and walls 46, 48 each have at least one structural member 52 extending along a bale forming direction 70 of the bale-chamber 26 that extends from the inlet end 40 to the outlet end 32 of the bale chamber 26. The structural members 52 contain the bale and serve to restrict the movement of the bale as it travels through the bale chamber 26.

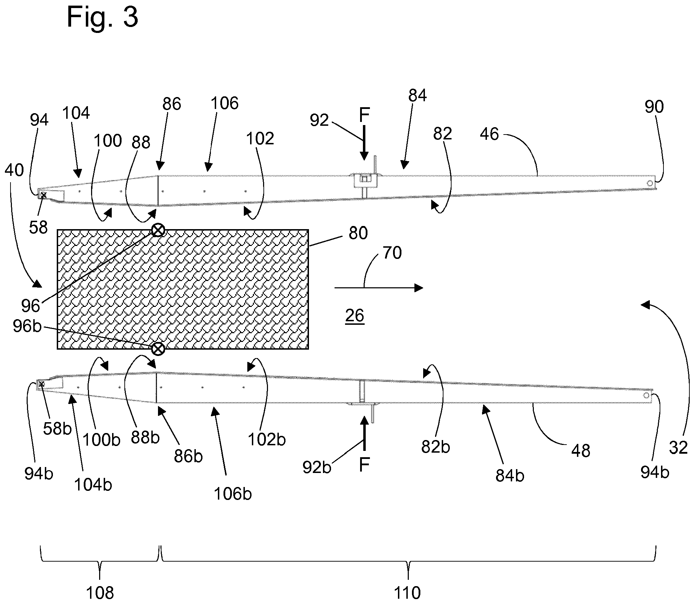

Fig. 3 shows a top view of a bale chamber 26, and includes a first wall 46 and the second wall 48 according to an embodiment of the present disclosure. A bale 80 is also shown in the bale chamber 26. In order to aid the clarity of the illustration, the bale is 80 is shown spaced apart from the walls 46, 48 and the ceiling 44 has been omitted. The bale forming direction 70 of the bale-chamber 26, which extends from the inlet end 40 to the outlet end 32 of the bale chamber 26 is also shown.

The first wall 46 has an inner surface 82 that defines the bale-chamber 26, and also has an outer surface 84 on the opposing side to the inner surface 82. In the bale forming direction 70, the inner surface 82 and the outer surface 84 both have convex profiles that each define an apex 86, 88. As shown in Fig. 3, an outer apex 86 of the outer surface 84 is substantially aligned with an inner apex 88 of the inner surface 82, in the bale forming direction 70.

The inner surface 82 extends between: (i) a proximal end 94 of the first wall 46; and (ii) a distal end 90 of the first wall 46. A first portion 100 of the inner surface 82 extends between: (i) the proximal end 94 of the first wall 46, and (ii) the inner apex 88. A second portion 102 of the inner surface 82 extends between: (i) the inner apex 88, and (ii) the distal end 90 of the first wall 46. In this example, the first portion 100 and the second portion 102 are substantially planar, although in other examples one or both of them may be curved or have any other profile.

The outer surface 84 also extends between: (i) the proximal end 94 of the first wall 46; and (ii) the distal end 90 of the first wall 46. A first portion 104 of the outer surface 84 extends between: (i) the proximal end 94 of the first wall 46, and (ii) the outer apex 86. A second portion 106 of the outer surface 84 extends between: (i) the outer apex 86, and (ii) the distal end 90 of the first wall 46. In this example, the first portion 104 and the second portion 106 are substantially planar, although in other examples one or both of them may be curved or have any other profile.

The inner surface 82 and outer surface 84 are convex because the associated apexes 86, 88 are located outside of a plane between the corresponding edges of the proximal and distal ends 90, 94 of the first wall 46 from which they extend. In this way, the inner and outer surfaces 82,84 extend outwardly from their longitudinal extremities to the apexes 86, 88, which are located partway along the surface in the bale forming direction 70. In the example of Fig. 3, the thickness of the overall profile of the first wall 46 increases as a function of distance from the proximal end of the wall (nearest the inlet end 40 of the bale chamber) to the outer apex 86, up to the outer apex 86 (this is for at least a portion of the wall that is identified with reference 108 in Figure 3). Then, the thickness of the overall profile of the associated wall decreases as a function of distance from the proximal end of the wall beyond the outer apex 86 (this is for at least a portion of the wall identified with reference 110 in Figure 3).

In some examples, the wall 46 comprises of an inner plate and an outer plate (not shown in Figure 3), with a cavity between the plates. In which case, an inner surface of the inner plate can provide the inner surface 82 of the wall 46, and an outer surface of the outer plate can provide the outer surface 84 of the wall 46. As shown in Fig. 2, the outer surface can be provided by one or more structural elements 52 that extend parallel to one another in the bale forming direction 70. Optionally, the thickness of one or both of the inner plate and the outer plate can vary along the bale forming direction 70 of the bale chamber 26. For instance, the thickness of one or both plates can have an increased value at the outer / inner apex 86, 88. In a similar way to the overall profile of the wall 46: (i) the thickness of the inner and / or outer plate may increase as a function of distance from the proximal end of the wall to the outer / inner apex 86, 88, at least for a portion 108 of the plate that is up to the outer / inner apex 86, 88; and / or (ii) the thickness of the inner and / or outer plate may decrease as a function of distance from the proximal end of the wall, at least for a portion 110 of the plate that is beyond the outer / inner apex 86, 88.

In this example the second wall 48 has the same structure as the first wall 46. The second wall 48 will not be described in detail here, although the corresponding features have been given corresponding reference numbers with a 'b' suffix.

The first portions 100, 100b of the inner surfaces 82, 82b of the first and second walls 46, 48 can be considered as defining a compression zone, where the inner surfaces 82, 82b taper inwards toward the bale chamber 26. The second portions 102, 102b of the inner surfaces 82, 82b of the first and second walls 46, 48 can be considered as defining a holding zone, where the inner surfaces 82, 82b taper outward away from the bale chamber 26. A transition between the compression zone and the holding zone occurs at the inner apexes 88, 88b. In practice, the density ring actuator system 50 can hold the ceiling 44 and walls 46, 48 at a slight inward angle, so that the inward taper of the compression zone becomes somewhat more pronounced, and the outward taper of the holding zone becomes more or less in parallel with the bale forming direction 70.

Returning to Fig. 2, the plunger, also referred to as a compressing device is not shown for the purpose of clarity. The plunger pushes the wad against the previously formed flakes causing a movement of the forming bale in the bale forming direction 70. This compression of the crop material in the bale, particularly in the compression zone, results in a force that is conveyed by way of the crop material to the structural members 52. When the plunger retracts there is some rebound of portions of the bale and the now reduced force on the bale is also felt by the structural members 52. The structural members 52 are held by support members, here illustrated as the support members 54 and 60 holding the structural members 52 associated with the ceiling 44 and the support members 56 and 58 holding the structural members 52 associated with the second wall 48. In a like manner the structural members 52 associated with the first wall 46 are also constrained.

The density ring actuator system 50 can be actuated by at least one density ring hydraulic cylinder (not shown). The density ring actuator system 50 presses inward on the structural members 52 of each of the ceiling 44 and walls 46, 48. These pivot inward about support members 58 and 60 at the inlet end 40 of the bale chamber 26 nearest the plunger 30. This inward force produced by the density ring actuator system 50 produces a friction force of the ceiling 44 and walls 46, 48 against the bale being compressed as flakes are added to it and as the plunger 30 pushes it through the bale chamber 26.

It is desirable for the force along the length of the bale chamber 26 to be as uniform as possible. If the force is not uniform, then this can result in a poor bale shape, and also binder twine snapping due to re-expansion of the crop material due to insufficient compression after the bale leaves the large square baler.

Referring now to Fig. 3, the force applied by the density ring actuator system is indicated with arrows 'F' 92, 92b. The walls 46, 48 are pivotable about pivot points 58, 58b, which correspond to the support members 58 at the inlet end 40 of the bale chamber 26 that are shown in Fig. 2. When a force F 92, 92b is applied to the bale by the density ring actuator system, the degree of stress experienced by the walls 46, 48 pressing against the bale 80 will vary along the length the walls 46, 48 (in the bale forming direction 70). This defines maximum-stress-points 96, 96b of the walls 46, 48, which are shown schematically on the edges of the bale 80 in Fig. 3 for ease of illustration. The maximum-stress-points 96, 96b correspond to a region of the walls 46, 48 that experiences maximum stress when a bale 80 is in the bale chamber 26.

If the walls 46, 48 did not extend beyond the density ring actuator system that applies the force 'F' 92, 92b, then the maximum-stress-points 96, 96b will coincide with a force equilibrium point of the bale 80. If the walls 46, 48 do extend beyond the density ring actuator system, then the maximum-stress-points 96, 96b may not coincide with the force equilibrium point of the bale 80.

The location of the maximum-stress-points 96, 96b, in the bale forming direction 70, can be calculated for the specific design of the baler. For example, load cells can be mounted in the wall of the bale chamber to measure the force profile of the crop on the wall when the baler is in use. Then, finite element analysis (FEA) can be performed on the measured force profile to determine the maximum-stress-points 96, 96b on the wall. In some examples, force profiles can be measured for a variety of conditions and then an average force profile can be used for the FEA calculations. In other examples, a force profile can be determined by simulation such that the maximum-stress-points 96, 96b can be calculated purely by way of simulation

As shown in Fig. 3, the outer apexes 86, 86b are aligned, in the bale forming direction 70, with the maximum-stress-points 96, 96b. In this way, additional reinforcement in the walls 46, 48 is provided at the point that will experience most force. This is because the walls 46, 48 are at their thickest, and therefore stiffest, in the regions that experience the highest stress. Furthermore, regions of the walls 46, 48 that are not adjacent to the maximum-stress-points 96, 96b, which do not require the same degree of strength / stiffness, are not unduly thick. Therefore, the walls 46, 48 can be made more lightweight than would be the case if they were the same thickness as at the outer apexes 86, 86b along their entire length. Using the relatively lightweight walls 46, 48 improves the fuel efficiency of the baler. Furthermore, by using walls with convex profiles, as shown, the quality of the bales is not compromised.

Therefore, an advantage of the baler shown in Fig. 3 is that it can result in higher, more consistent, compression of the agricultural crop material in the bale, thereby resulting in greater bale density without unduly increasing the weight of the baler. This is because only a local stiffness is needed to prevent bending of the wall 46, 48 at a position that is before the density ring actuator system 50 that applies the force 'F' 92, 92b, while still allowing a certain degree of flexibility of the bending of the wall 46, 48 at the distal end of the wall 46, 48. In this way, binder twine failure can be reduced after the bale leaves the large square baler.

As shown in the example of Fig.3, the inner apexes 88, 88b and the outer apexes 86, 86b are located in the bale forming direction 70 between: (i) the entry-end 40 of the bale chamber 26, and (ii) an actuator system (not shown) that applies the force F 92, 92b to press the two walls 46, 48 inward against the crop material being baled. In this way, the apexes 86, 86b, 88, 88b can be aligned with the maximum-stress-points 96, 96b.

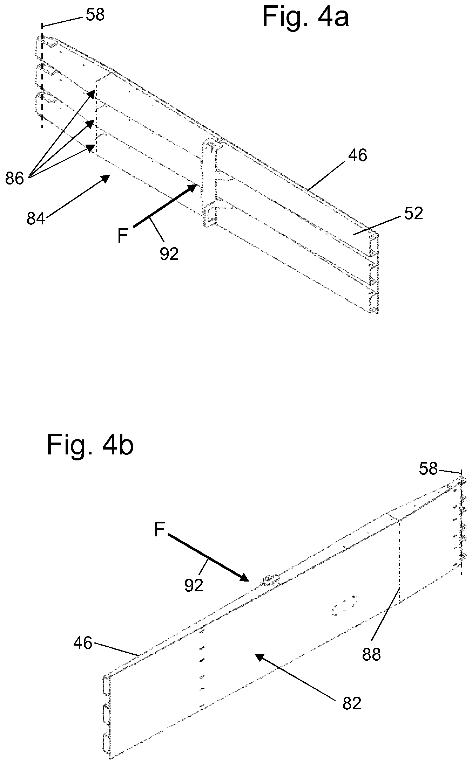

Fig. 4a shows a first perspective view of a wall 46, and Fig. 4b shows a second perspective view of the same wall 46. In Fig. 4a, the outer surface 84 is visible. In Fig. 4b, the inner surface 82 is visible.

Figs. 4a and 4b show the force 'F' 92 applied by the density ring actuator system, and also the pivot point 58 about which the wall 46 is pivotable.

Fig. 4a shows that the outer surface 84 of the wall need not be completely flat. In this example, it includes three structural members 52. One or more of the structural members 52 has an outer surface that includes an outer apex 86 in the same way as described above with reference to Fig. 3. The outer surface 84 can be considered as including one or more longitudinal grooves that extend along the outer surface 84 between the structural members 52. Nonetheless, when viewed from the side (as shown in Fig. 3) the wall can be considered as having an outer surface that has a convex profile.

In this example, each of the structural members 52 includes an outer apex 86, and therefore the wall 46 can be considered as having an outer apex 86 that extends laterally across substantially the entire width of the outer surface 84 of the wall 46. Similarly, as shown in Fig 4b, in this example the inner apex 88 extends laterally across substantially the entire width of the inner surface 82 of the wall 46. Also, in this example, the distance between the inner apex 88 and the outer apex 86 is substantially constant across the entire lateral width of the wall 46. It will be appreciated that such a lateral dimension is transverse to the bale forming direction 70.

In some examples, when a bale is in the bale chamber, the forces experienced by the wall 46 may not be consistent across the lateral width of the wall 46. In such examples, the thickness of the wall 46 may vary across the lateral width of the wall 46, optionally at the region of the wall 46 that corresponds to the outer and inner apexes 86, 88. In this way, the distance between the inner apex 88 and the outer apex 86 can be variable across the lateral width of the wall 46.

In one example, higher forces may be experienced at localised regions of the wall 46 such as at the lateral extremities of the wall 46. In which case, the thickness of the wall 46 may be greater at the lateral extremities of the wall than at the lateral centre of the wall 46. In another example, higher forces may be experienced at regions of the wall 46 that are at the centre of the wall 46 in a lateral dimension. In which case, the thickness of the wall 46 may be greater at the lateral centre of the wall 46 than at the lateral extremities of the wall 46. In cross-section, this can be considered as providing a wall 46 that has a 'roof shaped profile' of the outer apex 86 (as opposed to a straight line profile of the outer apex 86). That is, the wall 46 can have a 5-cornered shape.

The wall 46 may have any of the above profiles at a position in the bale forming direction 70 that corresponds with the outer and inner apexes 86, 88. Optionally, the wall 46 may have such profiles along the entire length of the wall 46.

Providing a wall 46 with the profiles described above can further improve the consistency with which the wall 46 applies a force to the bale when it is in the bale chamber, and can provide a wall 46 that has additional strength at regions that will experience greater stress when a bale is in the bale chamber. Therefore, better, more uniform, bales can be produced.

As described above, the wall 46 can consist of an inner plate and an outer plate in some examples. Also, the outer plate can comprise of one or more structural elements 52. One or both of the inner and outer plate can have a thickness profile that varies in the same way that is described above for the thickness of the wall 46 as a whole. Also, the plurality of structural members 52 can have different dimensions (such as height and / or width) to each other in order to vary the strength along a dimension of the wall 46. For example, the height profile of a plurality of laterally-aligned (longitudinally extending) structural members 52 can vary in the lateral dimension across the wall 26.

It will be appreciated that a ceiling of a bale chamber can be provided with a similar structure to the first and second walls 46, 48 that are described above. That is, the ceiling can have an inner surface that defines the bale-chamber; and an outer surface on the opposing side to the inner surface. As discussed above, in the bale forming direction, the inner surface and the outer surface of the ceiling can both have convex profiles that define an apex, and the apex in the outer surface can be substantially aligned with the apex in the inner surface in the bale forming direction.

In some examples, one, two or all of the ceiling, first wall, and second wall can have convex profiles as described herein.

## Claims

1. An agricultural baler (10), comprising:
a bale chamber (26) for the compression of crop material into bales, the bale chamber (26) having a floor (42), a ceiling (44), a first wall (46) and a second wall (48), and wherein a bale forming direction (70) of the bale-chamber (26) extends from an inlet end (40) to an outlet end (32) of the bale chamber (26);
a plunger (30) for forcing the crop material from the inlet end (40) of the bale chamber (26) towards the outlet end (32) of the bale chamber;
wherein one or more of the ceiling (44), the first wall (46) and the second wall (48) comprises:
an inner surface (82) that defines the bale-chamber (26); and
an outer surface (84) on the opposing side to the inner surface (82);
wherein, in the bale forming direction (70):
the inner surface (82) has a convex profile that defines an inner apex (88);
the outer surface (84) has a convex profile that defines an outer apex (86); and
the outer apex (86) is aligned with the inner apex (88).

2. The agricultural baler (10) of Claim 1, wherein the inner apex (88) and the outer apex (86) are aligned, in the bale forming direction (70), with a maximum-stress-point (96, 96b) of the wall or ceiling with the convex profile, wherein the maximum-stress-point (96, 96b) corresponds to a region that experiences maximum stress when a bale (80) is in the bale chamber (26).

3. The agricultural baler (10) of Claim 1 or Claim 2, wherein the thickness of the wall or ceiling with the convex profile:
increases as a function of distance from a proximal end of the wall to the outer apex (86), for at least a portion (108) of the wall or ceiling with the convex profile that is up to the outer apex (86); and
decreases as a function of distance from a proximal end of the wall, for at least a portion (110) of the wall or ceiling with the convex profile that is beyond the outer apex (86).

4. The agricultural baler (10) of any preceding claim, further comprising:
an actuator system (50) operable to press the ceiling (44) and the two walls (46, 48) inward against the crop material being baled; and
wherein the inner apex (88) and the outer apex (86) are located in the bale forming direction (70) between: (i) the entry-end (40) of the bale chamber (26), and (ii) the actuator system (50).

5. The agricultural baler (10) of any preceding claim, wherein:
the wall or ceiling with the convex profile comprises an inner plate and an outer plate, with a cavity between the inner plate and the outer plate;
an inner surface of the inner plate provides the inner surface (82) of the wall (46),
an outer surface of the outer plate provides the outer surface (84) of the wall (46); and
the thickness of one or both of the inner plate and outer plate varies along the bale forming direction (70) of the bale chamber (26).

6. The agricultural baler (10) of Claim 5, wherein:
the thickness of the inner and / or outer plate increases as a function of distance from the proximal end of the wall or ceiling with the convex profile to the outer / inner apex (86, 88), for at least a portion (108) of the inner and / or outer plate that is up to the outer / inner apex (86, 88); and / or
the thickness of the inner and / or outer plate decreases as a function of distance from the proximal end of the wall or ceiling with the convex profile, for at least a portion (110) of the inner and / or outer plate that is beyond the outer / inner apex (86, 88).

7. The agricultural baler (10) of any preceding claim, wherein the outer apex (86) extends laterally across substantially the entire width of the outer surface (84).

8. The agricultural baler (10) of any preceding claim, wherein the inner apex (88) extends laterally across substantially the entire width of the inner surface (82).

9. The agricultural baler (10) of any preceding claim, wherein the thickness of the wall or ceiling with the convex profile varies in a lateral dimension, at least at a region that corresponds to the outer apex (86).

10. The agricultural baler (10) of any preceding claim, wherein:
the wall or ceiling with the convex profile comprises an inner plate and an outer plate, with a cavity between the inner plate and the outer plate;
an inner surface of the inner plate provides the inner surface (82) of the wall (46),
an outer surface of the outer plate provides the outer surface (84) of the wall (46); and
the thickness of one or both of the inner plate and outer plate varies in a lateral dimension, at least at a region that corresponds to the outer apex (86).

11. The agricultural baler (10) of any preceding claim, wherein two or more of the ceiling (44), the first wall (46) and the second wall (48) comprise:
an inner surface (82, 82b) that defines the bale-chamber (26); and
an outer surface (84, 84b) on the opposing side to the inner surface (82, 82b);
wherein, in the bale forming direction (70):
the inner surface (82, 82b) has a convex profile that defines an inner apex (88, 88b);
the outer surface (84, 84b) has a convex profile that defines an outer apex (86, 86b); and
the outer apex (86, 86b) is substantially aligned with the inner apex (88, 88b).

12. The agricultural baler (10) of Claim 11 wherein, in the bale forming direction (70):
the inner apex (88) on one of the inner surfaces (82) is aligned with the inner apex (88b) on the other inner surface (82b); and
the outer apex (86) on one of the outer surfaces (84) is aligned with the outer apex (86b) on the other outer surface (84b).

13. The agricultural baler (10) of any preceding claim, wherein each of the ceiling (44), the first wall (46) and the second wall (48) comprise:
an inner surface that defines the bale-chamber (26); and
an outer surface on the opposing side to the inner surface;
wherein, in the bale forming direction:
the inner surface has a convex profile that defines an inner apex;
the outer surface has a convex profile that defines an outer apex; and
the outer apex is substantially aligned with the inner apex.

14. The agricultural baler (10) of Claim 13 wherein, in the bale forming direction (70):
the inner apex on one of the inner surfaces is aligned with the inner apex on the other two inner surfaces; and
the outer apex on one of the outer surfaces is aligned with the outer apex on the other two outer surfaces.

## Patentansprüche

1. Landwirtschaftliche Ballenpresse (10) mit:
einer Ballenpresskammer (26) zum Pressen von Erntegut zu Ballen, wobei die Ballenpresskammer (26) einen Boden (42), eine Decke (44), eine erste Wand (46) und eine zweite Wand (48) aufweist und wobei eine Ballenbildungsrichtung (70) der Ballenpresskammer (26) sich von einem Eingangsende (40) zu einem Ausgangsende (32) der Ballenpresskammer (26) erstreckt;
einem Kolben (30) zum Treiben des Ernteguts von dem Eingangsende (40) der Ballenpresskammer (26) in Richtung des Ausgangsendes (32) der Ballenpresskammer;
wobei ein oder mehrere Elemente aus der Decke (44), der ersten Wand (46) und der zweiten Wand (48) aufweisen:
eine innere Fläche (82), die die Ballenpresskammer (26) definiert; und
eine äußere Fläche (84) auf der der inneren Fläche (82) gegenüberliegenden Seite;
wobei in der Ballenbildungsrichtung (70):
die innere Fläche (82) ein konvexes Profil aufweist, das einen inneren Scheitelpunkt (88) definiert;
die äußere Fläche (84) ein konvexes Profil aufweist, das einen äußeren Scheitelpunkt (86) definiert;
und
der äußere Scheitelpunkt (86) mit dem inneren Scheitelpunkt (88) ausgerichtet ist.

2. Landwirtschaftliche Ballenpresse (10) nach Anspruch 1, wobei der innere Scheitelpunkt (88) und der äußere Scheitelpunkt (86) zueinander in der Ballenbildungsrichtung (70) mit einem maximalen Belastungspunkt (96, 96b) der Wand oder der Decke mit dem konvexen Profil ausgerichtet sind, wobei der maximale Belastungspunkt (96, 96b) einem Bereich entspricht, der eine maximale Belastung erfährt, wenn ein Ballen (80) in der Ballenpresskammer (26) ist.

3. Landwirtschaftliche Ballenpresse (10) nach Anspruch 1 oder nach Anspruch 2, wobei die Dicke der Wand oder der Decke mit dem konvexen Profil:
sich als eine Funktion eines Abstandes von einem proximalen Ende der Wand zu dem äußeren Scheitelpunkt (86) für mindestens einen Abschnitt (108) der Wand oder der Decke mit dem konvexen Profil vergrößert, der sich bis zum äußeren Scheitelpunkt (86) erstreckt; und
sich als eine Funktion eines Abstands von einem proximalen Ende der Wand für mindestens einen Abschnitt (110) der Wand oder der Decke mit dem konvexen Profil verringert, der sich hinter dem äußeren Scheitelpunkt (86) erstreckt.

4. Landwirtschaftliche Ballenpresse (10) nach einem der vorhergehenden Ansprüche, die des Weiteren aufweist:
ein Betätigungssystem (50), das zum Pressen der Decke (44) und der zwei Wände (46, 48) nach innen gegen das Erntegut betätigbar ist, das zu einem Ballen ausgebildet wird; und
wobei der innere Scheitelpunkt (88) und der äußere Scheitelpunkt (86) in der Ballenbildungsrichtung (70) zwischen (i) dem Eingangsende (40) der Ballenpresskammer (26), und (ii) dem Betätigungseinrichtungssystem (50) angeordnet sind.

5. Landwirtschaftliche Ballenpresse (10) nach einem der vorhergehenden Ansprüche, wobei:
die Wand oder die Decke mit dem konvexen Profil eine innere Platte und eine äußere Platte mit einer Kavität zwischen der inneren Platte und der äußeren Platte aufweist;
eine innere Fläche der inneren Platte die innere Fläche (82) der Wand (46) bereitstellt;
eine äußere Fläche der äußeren Platte die äußere Fläche (84) der Wand (46) bereitstellt;
und
die Dicke einer oder beider aus der inneren Platte und der äußeren Platte entlang der Ballenbildungsrichtung (70) der Ballenpresskammer (26) variiert.

6. Landwirtschaftliche Ballenpresse (10) nach Anspruch 5, wobei:
die Dicke der inneren und/oder der äußeren Platte sich als eine Funktion eines Abstands von dem proximalen Ende der Wand oder der Decke mit dem konvexen Profil zu dem äußeren/inneren Scheitelpunkt (86, 88) für mindestens einen Abschnitt (108) der inneren und/oder der äußeren Platte vergrößert, die sich bis zu dem äußeren/inneren Scheitelpunkt (86, 88) erstreckt; und/oder
die Dicke der inneren und/oder der äußeren Platte sich als eine Funktion eines Abstands von dem proximalen Ende der Wand oder der Decke mit dem konvexen Profil für mindestens einen Abschnitt (110) der inneren und/oder der äußeren Platte verringert, die hinter dem äußeren/inneren Scheitelpunkt (86, 88) angeordnet ist.

7. Landwirtschaftliche Ballenpresse (10) nach einem der vorhergehenden Ansprüche, wobei der äußere Scheitelpunkt (86) sich im Wesentlichen lateral über die gesamte Breite der äußeren Fläche (84) erstreckt.

8. Landwirtschaftliche Ballenpresse (10) nach einem der vorhergehenden Ansprüche, wobei der innere Scheitelpunkt (88) sich im Wesentlichen lateral über die gesamte Breite der inneren Fläche (82) erstreckt.

9. Landwirtschaftliche Ballenpresse (10) nach einem der vorhergehenden Ansprüche, wobei die Dicke der Wand oder der Decke mit dem konvexen Profil in einer lateralen Dimension mindestens in einem Bereich variiert, der dem äußeren Scheitelpunkt (86) entspricht.

10. Landwirtschaftliche Ballenpresse (10) nach einem der vorhergehenden Ansprüche, wobei:
die Wand oder die Decke mit dem konvexen Profil eine innere Platte und eine äußere Platte mit einer Kavität zwischen der inneren Platte und der äußeren Platte aufweist;
eine innere Fläche der inneren Platte die innere Fläche (82) der Wand (46) bereitstellt;
eine äußere Fläche der äußeren Platte die äußere Fläche (84) der Wand (46) bereitstellt;
und
die Dicke einer oder beiden aus der inneren Platte und der äußeren Platte in einer lateralen Dimension mindestens in einem Bereich variiert, der dem äußeren Scheitelpunkt (86) entspricht.

11. Landwirtschaftliche Ballenpresse (10) nach einem der vorhergehenden Ansprüche, wobei zwei oder mehr Elemente aus der Decke (44), der ersten Wand (46) und der zweiten Wand (48) aufweisen:
eine innere Fläche (82, 82b), die die Ballenpresskammer (26) definiert; und
eine äußere Fläche (84, 84b) auf der der inneren Fläche (82, 82b) gegenüberliegenden Seite;
wobei in der Ballenbildungsrichtung (70):
die innere Fläche (82, 82b) ein konvexes Profil aufweist, das einen inneren Scheitelpunkt (88, 88b) definiert;
die äußere Fläche (84, 84b) ein konvexes Profil aufweist, das einen äußeren Scheitelpunkt (86, 86b) definiert; und
der äußere Scheitelpunkt (86, 86b) im Wesentlichen mit dem inneren Scheitelpunkt (88, 88b) ausgerichtet ist.

12. Landwirtschaftliche Ballenpresse (10) nach Anspruch 11 wobei, in der Ballenbildungsrichtung (70):
der innere Scheitelpunkt (88) auf einer der inneren Flächen (82) mit dem inneren Scheitelpunkt (88b) auf der anderen inneren Fläche (82b) ausgerichtet ist; und
der äußere Scheitelpunkt (86) auf einer der äußeren Flächen (84) mit dem äußeren Scheitelpunkt (86b) auf der anderen äußeren Fläche (84b) ausgerichtet ist.

13. Landwirtschaftliche Ballenpresse (10) nach einem der vorhergehenden Ansprüche, wobei jedes Element aus der Decke (44), der ersten Wand (46) und der zweiten Wand (48) aufweist:
eine innere Fläche, die die Ballenpresskammer (26) definiert; und
eine äußere Fläche auf der der inneren Fläche gegenüberliegenden Seite;
wobei in der Ballenbildungsrichtung:
die innere Fläche ein konvexes Profil aufweist, das einen inneren Scheitelpunkt definiert;
die äußere Fläche ein konvexes Profil aufweist, das einen äußeren Scheitelpunkt definiert; und
der äußere Scheitelpunkt im Wesentlichen mit dem inneren Scheitelpunkt ausgerichtet ist.

14. Landwirtschaftliche Ballenpresse (10) nach Anspruch 13, wobei in der Ballenbildungsrichtung (70):
der innere Scheitelpunkt auf einer der inneren Flächen mit dem inneren Scheitelpunkt auf den zwei anderen inneren Flächen ausgerichtet ist; und
der äußere Scheitelpunkt auf einer der äußeren Flächen mit dem äußeren Scheitelpunkt auf den zwei anderen äußeren Flächen ausgerichtet ist.

## Revendications

1. Presse à balles agricole (10), comprenant :
une chambre à balles (26) pour la compression de matériau de récolte en balles, la chambre à balles (26) ayant un plancher (42), un plafond (44), une première paroi (46) et une seconde paroi (48), dans laquelle une direction de formation de balles (70) de la chambre à balles (26) s'étend depuis une extrémité d'entrée (40) à une extrémité de sortie (32) de la chambre à balles (26) ;
un piston (30) pour forcer le matériau de récolte depuis l'extrémité d'entrée (40) de la chambre à balles (26) vers l'extrémité de sortie (32) de la chambre à balles ;
dans laquelle un ou plusieurs éléments parmi le plafond (44), la première paroi (46) et la seconde paroi (48) comprennent :
une surface intérieure (82) qui définit la chambre à balles (26) ; et une surface extérieure (84) du côté opposé à la surface intérieure (82) ; dans laquelle, dans la direction de formation de balles (70) :
la surface intérieure (82) a un profil convexe qui définit un sommet intérieur (88) ; la surface extérieure (84) a un profil convexe qui définit un sommet extérieur (86) ;
et
le sommet extérieur (86) est aligné avec le sommet intérieur (88).

2. Presse à balles agricole (10) selon la revendication 1, dans laquelle le sommet intérieur (88) et le sommet extérieur (86) sont alignés, dans la direction de formation de balles (70), avec un point de contrainte maximale (96, 96b) de la paroi ou du plafond au profil convexe, dans lequel le point de contrainte maximale (96, 96b) correspond à une région qui subit une contrainte maximale lorsqu'une balle (80) se trouve dans la chambre à balles (26).

3. Presse à balles agricole (10) selon la revendication 1 ou la revendication 2, dans laquelle l'épaisseur de la paroi ou du plafond au profil convexe :
augmente en fonction de la distance entre l'extrémité proximale de la paroi et le sommet extérieur (86), pour au moins une partie (108) de la paroi ou du plafond au profil convexe qui va jusqu'au sommet extérieur (86) ; et
diminue en fonction de la distance par rapport à l'extrémité proximale de la paroi, pour au moins une partie (110) de la paroi ou du plafond au profil convexe qui est au-delà du sommet extérieur (86).

4. Presse à balles agricole (10) selon l'une quelconque des revendications précédentes, comprenant en outre :
un système d'actionneur (50) permettant d'appuyer sur le plafond (44) et les deux parois (46, 48) vers l'intérieur contre le matériau de récolte étant compressé en balles ; et
dans laquelle le sommet intérieur (88) et le sommet extérieur (86) sont situés dans la direction de formation de balles (70) entre : (i) l'extrémité d'entrée (40) de la chambre à balles (26), et (ii) le système d'actionneur (50).

5. Presse à balles agricole (10) selon l'une quelconque des revendications précédentes, dans laquelle :
la paroi ou le plafond au profil convexe comprend une plaque intérieure et une plaque extérieure, avec une cavité entre la plaque intérieure et la plaque extérieure ;
une surface intérieure de la plaque intérieure fournit la surface intérieure (82) de la paroi (46),
une surface extérieure de la plaque extérieure fournit la surface extérieure (84) de la paroi (46) ;
et
l'épaisseur de la plaque intérieure ou de la plaque extérieure, ou des deux, varie le long de la direction de formation de balles (70) de la chambre à balles (26).

6. Presse à balles agricole (10) selon la revendication 5, dans laquelle :
l'épaisseur de la plaque intérieure et/ou extérieure augmente en fonction de la distance entre l'extrémité proximale de la paroi ou du plafond au profil convexe et le sommet extérieur/intérieur (86, 88), pour au moins une partie (108) de la plaque intérieure et/ou extérieure allant jusqu'au sommet extérieur/intérieur (86, 88) ; et/ou
l'épaisseur de la plaque intérieure et/ou extérieure diminue en fonction de la distance par rapport à l'extrémité proximale de la paroi ou du plafond au profil convexe, pour au moins une partie (110) de la plaque intérieure et/ou extérieure qui se trouve au-delà du sommet extérieur/intérieur (86, 88).

7. Presse à balles agricole (10) selon l'une quelconque des revendications précédentes, dans laquelle le sommet extérieur (86) s'étend latéralement sur pratiquement toute la largeur de la surface extérieure (84).

8. Presse à balles agricole (10) selon l'une quelconque des revendications précédentes, dans laquelle le sommet intérieur (88) s'étend latéralement sur pratiquement toute la largeur de la surface intérieure (82).

9. Presse à balles agricole (10) selon l'une quelconque des revendications précédentes, dans laquelle l'épaisseur de la paroi ou du plafond au profil convexe varie dans une dimension latérale, au moins dans une région qui correspond au sommet extérieur (86).

10. Presse à balles agricole (10) selon l'une quelconque des revendications précédentes, dans laquelle :
la paroi ou le plafond au profil convexe comprend une plaque intérieure et une plaque extérieure, avec une cavité entre la plaque intérieure et la plaque extérieure ; une surface intérieure de la plaque intérieure fournit la surface intérieure (82) de la paroi (46),
une surface extérieure de la plaque extérieure fournit la surface extérieure (84) de la paroi (46) ; et
l'épaisseur de la plaque intérieure ou de la plaque extérieure, ou des deux, varie dans une dimension latérale, au moins dans une région qui correspond au sommet extérieur (86).

11. Presse à balles agricole (10) selon l'une quelconque des revendications précédentes, dans laquelle deux ou plusieurs éléments parmi le plafond (44), la première paroi (46) et la seconde paroi (48) comprennent :
une surface intérieure (82, 82b) qui définit la chambre à balles (26) ; et
une surface extérieure (84, 84b) du côté opposé à la surface intérieure (82, 82b) ; dans laquelle, dans la direction de formation de balles (70) :
la surface intérieure (82, 82b) a un profil convexe qui définit un sommet intérieur (88, 88b) ;
la surface extérieure (84, 84b) a un profil convexe qui définit un sommet extérieur (86, 86b) ; et
le sommet extérieur (86, 86b) est sensiblement aligné avec le sommet intérieur (88, 88b).

12. Presse à balles agricole (10) selon la revendication 11 dans laquelle, dans la direction de formation de balles (70) : le sommet intérieur (88) sur l'une des surfaces intérieures (82) est aligné avec le sommet intérieur (88b) sur l'autre surface intérieure (82b) ; et
le sommet extérieur (86) selon l'une des surfaces extérieures (84) est aligné avec le sommet extérieur (86b) de l'autre surface extérieure (84b).

13. Presse à balles agricole (10) selon l'une quelconque des revendications précédentes, dans laquelle le plafond (44),
la première paroi (46) et la seconde paroi (48) comprennent :
une surface intérieure qui définit la chambre à balles (26) ; et
une surface extérieure du côté opposé à la surface intérieure ;
dans laquelle, dans la direction de formation de balles :
la surface intérieure a un profil convexe qui définit un sommet intérieur ;
la surface extérieure a un profil convexe qui définit un sommet extérieur ; et
le sommet extérieur est sensiblement aligné sur le sommet intérieur.

14. Presse à balles agricole (10) selon la revendication 13 dans laquelle, dans la direction de formation de balles (70) : le sommet intérieur de l'une des surfaces intérieures est aligné avec le sommet intérieur des deux autres surfaces intérieures ; et
le sommet extérieur de l'une des surfaces extérieures est aligné avec le sommet extérieur des deux autres surfaces extérieures.
